## Europäisches Patentamt

## European Patent Office

## Office européen des brevets

(19)

(11) Veröffentlichungsnummer: **0 122 254**
**B1**

(12)
# EUROPÄISCHE PATENTSCHRIFT

(45) Veröffentlichungstag der Patentschrift:
**10.06.87**

(51) Int. Cl.⁴: **B 60 R 13/08,** B 60 K 11/08

(21) Anmeldenummer: **84890065.0**

(22) Anmeldetag: **03.04.84**

(54) **Kraftfahrzeug.**

(30) Priorität: 08.04.83 AT 1267/83
28.06.83 AT 2370/83
25.08.83 AT 3040/83

(43) Veröffentlichungstag der Anmeldung:
**17.10.84 Patentblatt 84/42**

(45) Bekanntmachung des Hinweises auf die Patenterteilung:
**10.06.87 Patentblatt 87/24**

(84) Benannte Vertragsstaaten:
**DE FR**

(56) Entgegenhaltungen:
AT-B-369 700
CH-A-202 998
DE-A-2 913 648
DE-A-2 952 190
DE-A-3 019 513
DE-A-3 225 347
FR-A-2 314 088
FR-A-2 331 111
FR-A-2 364 779
FR-A-2 402 768
FR-A-2 448 448
GB-A-2 002 850

(73) Patentinhaber: **AVL GESELLSCHAFT FÜR VERBRENNUNGSKRAFTMASCHINEN UND MESSTECHNIK MBH.PROF.DR.DR.H.C.HANS LIST, Kleiststrasse 48, A-8020 Graz (AT)**

(72) Erfinder: **Kirchweger, Karl, Stiftingtalstrasse 71, A-8010 Graz (AT)**
Erfinder: **Knopf, Franz, Papiermühlgasse 19/9, A-8020 Graz (AT)**
Erfinder: **Thien, Gerhard, Stiftingtalstrasse 71, A-8010 Graz (AT)**

(74) Vertreter: **Krause, Walter, Dr. Dipl.- Ing., Postfach 200 Singerstrasse 8, A-1014 Wien (AT)**

EP 0 122 254 B1

LIBER, STOCKHOLM 1987

## Beschreibung

Die Erfindung betrifft ein Kraftfahrzeug mit einer zum Antrieb desselben dienenden, in einem frontseitigen Motorraum angeordneten, wassergekühlten Brennkraftmaschine, wobei der Motorraum durch zusätzliche, gegenüber Rahmen- bzw. Karosserieteilen abgedichtete Schalenteile zu einer schalldämmenden Kapsel vervollständigt ist, welche schalldämpfende Zu- und Ableitungen für die Kapselkühlluft aufweist, und wobei unabhängig von einer Gebläsebelüftung der Kapsel zumindest eine Zuleitungsöffnung für die Kapselkühlluft mit einer Einlaßöffnung in Verbindung steht, welche an einer bei in Fahrt befindlichem Fahrzeug dem Staudruck ausgesetzten Stelle des Fahrzeuges angeordnet ist.

Ein Kraftfahrzeug dieser Art ist in GB-A-2 002 850 beschrieben. Dabei weist die Verschalung der Brennkraftmaschine eine mit einer Auskleidung aus schallschluckendem Material versehene Lufteintrittsöffnung auf, die schnorchelartig bis zum Wasserkühler vorgezogen ist, sodaß keine vom Wasserkühler erhitzte und vom Ventilator geförderte Luft in die Lufteintrittsöffnung gelangen kann. Innerhalb der Verschalung ist ein Gebläse angeordnet, das von der Kurbelwelle der Brennkraftmaschine angetrieben ist und Kühlluft von der Eintrittsöffnung der Verschalung über die Brennkraftmaschine fördert. Ein Teilstrom der Kühlluft strömt über die an der Oberseite der Verschalung angeordnete, mit einer Auskleidung aus schallschluckendem Material versehene Luftaustrittsöffnung ins Freie ab. Ein zweiter Teilstrom umströmt auch das Getriebe und tritt über einen zur Kardanwelle koaxialen Ringspalt, der ebenfalls mit schallschluckendem Material versehen ist, ins Freie aus.

Da die Lufteintrittsöffnung der Verschalung in Fahrtrichtung gelegen ist, ist sie bei in Fahrt befindlichem Fahrzeug einem Staudruck ausgesetzt, wodurch dem Gebläse innerhalb der Verschalung Kühlluft mit erhöhtem Druck zugeführt wird. Dies erhöht zwar den Durchsatz an Kühlluft durch die Verschalung, ohne jedoch eine gezielte, effektive Kühlung besonders temperaturempfindlicher Bauteile der Brennkraftmaschine zu bewirken. Der schnorchelartige Lufteinlaß über dem Wasserkühler erhöht den Platzbedarf der Brennkraftmaschine an einer ohnehin sehr gedrängten Stelle.

Kraftfahrzeuge, wie sie beispielsweise aus der DE-A-32 25 347 oder der AT-B-369 700 bekannt sind, haben üblicherweise mit der Funktion der Brennkraftmaschine gekoppelte Gebläse, welche für die im Betrieb der Brennkraftmaschine erforderliche Belüftung des Innenraumes der schalldämmenden Kapsel durch Einsaugen von Kühlluft durch die Zuleitungsöffnungen sorgen. Die Ableitungsöffnungen sind bei diesen bekannten Kraftfahrzeugen stets im Bereich des heißen Auspuffsystems bzw. des Auspuffsammelrohres vorgesehen, womit die Kühlluftführung von den im Betrieb der Brennkraftmaschine kühleren zu den heißeren Teilen hin erfolgt.

Der Nachteil der genannten bekannten Ausführungen besteht darin, daß eine gezielte Kühlung des Innenraumes der schalldämmenden Kapsel bzw. eine gezielte Führung des Kühlluftstromes in der Kapsel relativ schwierig ist, da wegen des mit der Anordnung und dem Antrieb des Gebläses an der Zuleitungsöffnung verbundenen Aufwands eine freie Wahl der Anordnung dieser Zuleitungsöffnung bzw. die Anordnung von mehreren derartigen Zuleitungsöffnungen, die alle mit einem Gebläse versehen werden müßten bzw. zumindest - wie beispielsweise aus der genannten DE-A-32 25 347 ersichtlich im Wirkungsbereich eines Gebläses liegen müßten, nicht vertretbar ist.

Die Aufgabe der vorliegenden Erfindung besteht darin, ein Kraftfahrzeug der eingangs genannten Art so auszubilden, daß mit geringem konstruktiven Aufwand und ohne die Wartungs- bzw. Montagearbeiten wesentlich zu beeinflussen, eine Verbesserung der Belüftung der schalldämmenden Kapsel dahingehend erreicht wird, daß eine gezielte Einflußnahme auf die Kühlluftführung innerhalb der Kapsel bei möglichst geringem baulichem Mehraufwand möglich ist.

Dies wird gemäß der Erfindung dadurch erreicht, daß zumindest einer der in die Kapselwand integrierten Rahmenlängsholme Kapselkühlluft zur Zuleitungsöffnung führt. Auf diese Weise sind vorhandene Rahmenbauteile durch einfache Maßnahmen zu Bauteilen für die Zuleitung der Kapselkühlluft ausgebildet bzw. ergänzt, was die zumeist sehr gedrängten Platzverhältnisse bei derartigen Anordnungen in sehr vorteilhafter Weise nicht weiter belastet.

In weiterer Ausgestaltung der Erfindung kann im Bereich des vorderen Endes der Rahmenlängsholme ein Querträger mit einer in Fahrtrichtung offenen Einlaßöffnung vorgesehen sein, der zu einem ansonsten im wesentlichen geschlossenen Einlaßgehäuse ausgebildet ist, eine schallabsorbierende Auskleidung aufweist und zumindest mit einem der Rahmenlängsholme über eine Öffnung in Verbindung steht. Durch diese Maßnahmen ist es möglich, die Effektivität der angestrebten zusätzlichen Kühlung über den Staudruck weiter zu verbessern, ohne Nachteile hinsichtlich der Einbaumöglichkeit der Brennkraftmaschine oder einer erhöhten Lärmabstrahlung derselben in Kauf nehmen zu müssen.

Besonders vorteilhaft ist es, wenn gemäß einer weiteren Ausgestaltung der Erfindung, die Zuleitungsöffnung(en) im Bereich von besonders zu kühlenden Teilen bzw. Zusatzaggregaten der Brennkraftmaschine angeordnet ist bzw. sind. Auf diese einfache Weise kann eine effektive Kühlung von besonders temperaturempfindlichen Bauteilen, wie beispielsweise der Ölwanne, der Lichtmaschine, der Kraftstoffpumpe usw.,

vorgenommen werden, ohne daß der zusätzliche Aufwand in nennenswerter Weise erhöht würde.

Bei einem Kraftfahrzeug mit einem eigenen Gebläse zur Kapselbelüftung ist gemäß einem weiteren Merkmal der Erfindung vorgesehen, daß die vom Gebläse unabhängigen Zuleitungen mit einer Rückschlageinrichtung versehen ist bzw. sind, welche bei Überschreitung des jeweiligen Staudruckes durch den Kapselinnendruck den Austritt von Kapselkühlluft an dieser Stelle verhindert. Bei laufender Brennkraftmaschine und stehendem Fahrzeug wird bei derartigen Anordnungen also nur das eigene Gebläse für die Kapselbelüftung sorgen, wobei die infolge des durch das Gebläse erhöhten Innendruckes der Kapsel geschlossenen Rückschlageinrichtungen den Kühlluftverlust durch die nicht mit einem Gebläse versehenen Einlaß- bzw. Zuleitungsöffnungen verhindern. Das gleiche gilt auch bis der Wert des Staudruckes an den Einlaß- bzw. Zuleitungsöffnungen eine bestimmte Grösse erreicht, die von der Leistung des zusätzlichen Kapselbelüftungsgebläses und der Vorspannung der Rückschlageinrichtung abhängig ist.

In diesem Zusammenhang ist es besonders vorteilhaft, wenn die Rückschlageinrichtung in an sich bekannter Weise als federbelastete Klappe ausgebildet ist, wobei diese Klappe aus den verschiedensten Werkstoffen bestehen kann und beispielsweise bei Gummi- oder Kunststoffausführung auch auf verschiedenste und ebenfalls bekannte Weise mit den Schwenk- und Belastungsmechanismen kombiniert sein kann.

Insbesondere bei kleinen Personen-Kraftfahrzeugen mit quer zur Fahrzeugachse eingebauten Frontmotoren, für die üblicherweise ein eigenes Gebläse zur Kapselbelüftung bei stillstehendem Fahrzeug bzw. kleinen Fahrzeuggeschwindigkeiten angeordnet werden muß, ist der Einbau einer Zuführungsleitung zu diesem Gebläse mitunter sehr schwierig, da der Motorraum sehr beengt ist und die an der Stirnseite der Brennkraftmaschine allenfalls vorhandenen, möglichen Antriebswellen unmittelbar an der seitlichen Begrenzung des Motorraumes bzw. der schalldämmenden Kapsel stehen bzw. an Zusatzaggregate, wie die Batterie, den Waschwasserbehälter, Sicherungskästen od. dgl. grenzen, sodaß für Zuführungsleitungen bzw. Einlaufgehäuse zu diesem Gebläse kein Platz vorhanden ist. Um auch bei gedrängten Platzverhältnissen und quer eingebautem Frontmotor auf einfache Weise eine ausreichende Kapselbelüftung sicherzustellen, ist gemäß einer weiteren Ausgestaltung der Erfindung vorgesehen, daß ein eigenes Kapselkühlgebläse im Bereich einer Zuleitungsöffnung eines Rahmenholmes angeordnet ist, welches von der Brennkraftmaschine bzw. einem Zusatzaggregat aus angetrieben ist. Auf diese Weise werden sehr vorteilhaft die Zuleitungsöffnungen im Bereich der Rahmenholme unmittelbar zur Kühlluftzuführung zu einem im Bereich einer dieser Zuleitungsöffnungen angeordneten eigenen Gebläse verwendet, wobei infolge der quer eingebauten Antriebs-Brennkraftmaschine entweder direkt eine der drehenden Wellen (Kurbelwelle, Nockenwelle, Steuerradwelle) zum Antrieb dieses Gebläses herangezogen werden kann, oder aber das Gebläse über einen von der Brennkraftmaschine angetriebenen Keilriementrieb od. dgl. betätigt werden kann. Auf alle Fälle kann damit eine eigene Zuführungsleitung zum Kapselkühlgebläse samt ihrem beim Gebläseeintritt zentrierten Einlaufgehäuse und einem zugehörigen Schalldämpfer entfallen, da diese Bauelemente bereits unter teilweiser Zuhilfenahme von vorhandenen Rahmenbauteilen gegeben sind.

In weiterer Ausgestaltung der Erfindung ist vorgesehen, daß der Lüfter der Kühler-Lüfter-Einheit der Brennkraftmaschine - in Fahrtrichtung gesehen - vor dem Kühler angeordnet und thermostatisch gesteuert unabhängig vom jeweiligen Betriebszustand der Brennkraftmaschine antreibbar ist, daß zwischen Lüfter und Kühler ein zumindest teilweise geschlossenes Luftführungsgehäuse angeordnet ist, und daß das Luftführungsgehäuse eine Abzweigöffnung aufweist, welche über eine Zuleitung mit zumindest einem der mit einer Zuleitungsöffnung versehenen Rahmenlängsholme in Verbindung steht, womit auf einfache Weise sowie auch bei gedrängten Platzverhältnissen eine ausreichende Kapselbelüftung sichergestellt werden kann. Der in modernen Kraftfahrzeugen bereits relativ häufig vor dem Kühler angeordnete und beispielsweise über einen Elektromotor angetriebene Lüfter, der zur Erhöhung des Wirkungsgrades sowie auch zur Senkung des erzeugten Geräuschpegels üblicherweise von einem bis an den nachgeschalteten Kühler heranreichenden Luftführungsgehäuse umgeben ist, erzeugt während er im Betrieb ist vor dem Kühler bzw. in diesem Luftführungsgehäuse einen Überdruck, der zur Förderung der Kühlluft durch den Kühler führt. Aus diesem Überdruckbereich zwischen Lüfter und Kühler wird also gemäß der genannten Ausbildung Luft zur fallweise erforderlichen Zwangsbelüftung der schalldämmenden Kapsel abgezweigt, wobei die Zuführung zur eigentlichen Zuleitungsöffnung über zumindest einen der in die Kapselwand integrierten Rahmenlängsholme erfolgt. Es ist also in sehr vorteilhafter Weise kein eigenes, relativ teueres zusätzliches Gebläse für die Kapselbelüftung erforderlich, wobei jedoch trotzdem sichergestellt ist, daß in Betriebsbereichen, wo der Staudruck vor dem Fahrzeug bzw. vor der Einlaßöffnung zum Einlaßgehäuse für die erforderliche Kapselbelüftung nicht ausreicht, keine unzulässige Erwärmung des Innenraumes der Kapsel bzw. der darin angeordneten Bauteile erfolgen kann. Infolge der Ausnutzung des vorhandenen Lüfters sowie der für die Kapselbelüftung ausgestalteten Rahmenlängsholme ist als zusätzlicher Bauteil lediglich die Zuleitung von der Abzweigöffnung im Luftführungsgehäuse bis zum Rahmenlängsholm vorzusehen, was eine sehr kostengünstige Ausbildung des Kraftfahrzeuges ermöglicht. Der Lüfter selbst bzw. der Antrieb des Lüfters muß für die Erfordernisse der Kapselbelüftung allenfalls etwas größer dimensioniert werden, was jedoch kaum ins Gewicht fällt, wenn man bedenkt, daß der Elektroantrieb des Kühlerlüfters einer Brennkraftmaschine für ein Personen-Kraftfahrzeug eine Leistungsaufnahme im Bereich von etwa 100 bis 200 Watt aufweist, was sich für die Erfordernisse der vorliegenden Erfindung allenfalls geringfügig erhöht.

Gemäß einer weiteren Ausgestaltung der Erfindung ist vorgesehen, daß die von der Abzweigöffnung bzw. der Zuleitung unabhängigen Zuströmwege für die Staudruckbelüftung der Kapsel mit Rückschlageinrichtungen, wie beispielsweise federbelasteten Kappen, versehen sind. Auf diese Weise kann verhindert werden, daß bei Zwangsbelüftung der schalldämmenden Kapsel über die Abzweigung vom Luftführungsgehäuse des Lüfters die Kapselkühlluft über die für die Staudruckbelüftung vorgesehenen Zuströmwege aus der Kapsel entweicht. Dies ist insbesonders deswegen vorteilhaft, da üblicherweise getrachtet wird, daß die Abströmung der Kapselkühlluft über im Bereich des heißen Auspuffsystems angeordnete Austrittsöffnungen erfolgt, damit auch dort eine ausreichende Kühlung·sichergestellt ist.

Gemäß einer weiteren Ausgestaltung der Erfindung kann im Bereich von besonders zu kühlenden Stellen der Brennkraftmaschine oder ihrer Zusatzaggregate zumindest ein Temperaturfühler angeordnet sein, über den zusätzlich zum Temperaturfühler im Kühlwasser der Lüfter bei Überschreitung einer vorgegebenen Temperatur ein- bzw. ausschaltbar ist. Damit ist ermöglicht, daß der Lüfter vor dem Kühler nicht nur - wie üblich - in Abhängigkeit von der Kühlwassertemperatur, sondern auch in Abhängigkeit von der Temperatur an besonders zu kühlenden Stellen des Innenraumes der Kapsel ein- bzw. ausgeschaltet wird, was wegen der erfindungsgemäßen Verwendung eines aus dem Druckbereich hinter dem Lüfter abgezweigten Luftstromes für die Kapselkühlung besonders vorteilhaft ist.

Die Erfindung wird im folgenden anhand der in der Zeichnung dargestellten Ausführungsbeispiele näher erläutert.

Figur 1 zeigt einen teilweisen Vertikalschnitt durch ein schematisch dargestelltes Kraftfahrzeug nach der Erfindung,

Figur 2 einen teilweisen Schnitt entlang der Linie II-II in Fig. 1,

Figur 3 eine Ansicht entlang des Pfeiles III in Fig. 1 bei weggelassener Brennkraftmaschine,

Figur 4 zeigt eine der Fig. 3 entsprechende Ansicht (bei abgenommener Motorhaube) eines anderen Ausführungsbeispieles,

Figur 5 zeigt einen teilweisen Vertikalschnitt nach der Linie V-V in Fig. 6 durch ein schematisch dargestelltes weiteres Ausführungsbeispiel,

Figur 6 eine Ansicht des teilweise geschnittenen Kraftfahrzeuges gemäß Fig. 5 von oben, wobei die Motorhaube abgenommen ist,

Figur 7 eine teilweise Draufsicht auf ein weiteres Ausführungsbeispiel eines erfindungsgemäß ausgebildeten Kraftfahrzeuges bei abgenommener Motorhaube und

Figur 8 zeigt eine teilweise geschnittene Ansicht des Kraftfahrzeuges nach Fig. 7 von vorne.

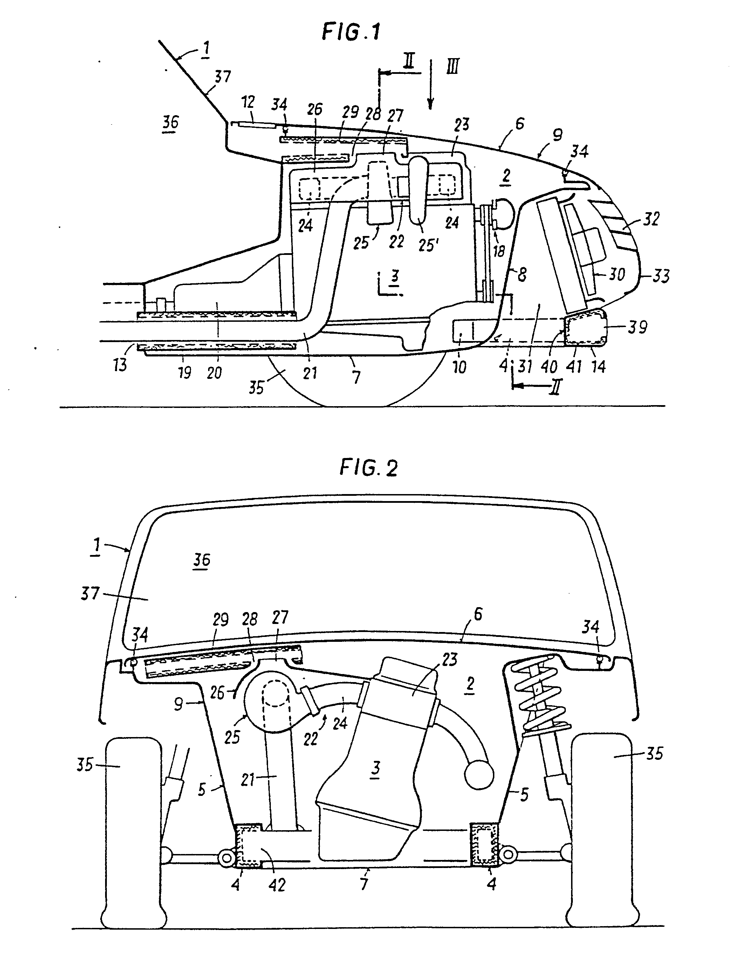

Das in den Fig. 1 bis 3 dargestellte Kraftfahrzeug 1 ist als Personenwagen ausgebildet und weist eine zum Antrieb desselben dienende, frontseitig in einem Motorraum 2 angeordnete Brennkraftmaschine 3 auf. Der Motorraum 2 ist durch zusätzliche, gegenüber Rahmen- bzw. Karosserieteilen - wie beispielsweise den Rahmenlängsholmen 4, den Radkastenabdeckungen 5 oder der Motorhaube 6 - abgedichtete Schalenteile - wie beispielsweise den Boden 7 und die vordere Stauwand 8 - zu einer geschlossenen schalldämmenden Kapsel 9 vervollständigt. Die Kapsel 9 weist Zuleitungsöffnungen 10 sowie Ableitungsöffnungen 12, 13 auf, welche gegen Austritt von Luftschall isoliert sind und zur Belüftung der Kapsel dienen.

Die Zuleitungsöffnungen 10 sind im dargestellten Ausführungsbeispiel am kapselinnenseitigen Ende zweier vom vorderen Querträger 14 des Fahrzeuges 1 ausgehender gebogener Führungsrohre 15 angeordnet, deren querträgerseitige Enden Einlaßöffnungen 39 aufweisen, die bei in Fahrt befindlichem Fahrzeug dem Staudruck ausgesetzt sind. Eine schallabsorbierende Auskleidung 16 verhindert den Austritt von Luftschall aus der Kapsel 9, wobei die gebogene Ausführung der Führungsrohre 15 den direkten Schallaustritt unterbindet. Die Zuleitungsöffnung 11, die hier ebenfalls an einer dem Staudruck ausgesetzten Stelle der Vorderseite des Fahrzeuges 1 angeordnet ist, steht im dargestellten Ausführungsbeispiel über einen flexiblen Schlauch 17 mit einem von der Brennkraftmaschine 3 direkt angetriebenen Gebläse 18 in Verbindung, welches auch bei stillstehendem Kraftfahrzeug und laufender Brennkraftmaschine ausreichend Kühlluft in die Kapsel fördern kann. Wegen der Saugwirkung des Gebläses 18 könnte diese Zuleitungsöffnung 11 aber auch an relativ beliebiger anderer Stelle des Fahrzeuges angeordnet sein.

Die Ableitungsöffnung 13 ist als ringförmiger und mit einem Absorptionsschalldämpfer 19 versehener Spalt um das neben dem Getriebe 20 aus der Kapsel 9 führende Auspuffsammelrohr 21 ausgebildet, wodurch der Durchtritt des Auspuffsammelrohres 21 durch die Kapsel berührungslos erfolgt. Im Bereich der vom Auspuffsystem 22 der Brennkraftmaschine 3 - welches im dargestellten Ausführungsbeispiel neben den am Zylinderkopf 23 angeflanschten Auspuffkrümmern 24 und dem Sammelrohr 21 noch einen Abgas-Turbolader 25 umfaßt - aufsteigenden, erhitzten Luft ist eine zumindest die zylinderkopfnahen Teile des Auspuffsystems 22 dachartig bedeckendem nach unten offene Abdeckung 26 als separate Auspuffverschalung angeordnet, welche in nicht dargestellter Weise an der Brennkraftmaschine 3 bzw. am Auspuffsystem 22 befestigt ist. Die Abdeckung 26 weist einen Auslaßstutzen 27 auf, der berührungslos und unter Freilassung eines im wesentlichen ringförmigen Spaltes 28 in einen an der aufklappbaren Motorhaube 6 angeordneten Absorptionsschalldämpfer 29 mündet, der mit der Ableitungsöffnung 12 in Verbindung steht. Diese Ableitungsöffnung 12 kann - wie im dargestellten Ausführungsbeispiel - in einem bei in Fahrt befindlichem Fahrzeug Unterdruck aufweisenden Bereich angeordnet sein, was einen Absaugeffekt über die Ableitungsöffnung 12 bzw. den angeschlossenen Absorptionsschalldämpfer 29 ergibt.

Auf weitere Bauteile des dargestellten Fahrzeuges, wie die frontseitig angeordnete Kühler-Lüfter-Gruppe 30, den Luftableitungsschacht 31, den Kühlergrill 32, die Stoßstange 33, die Dichtungen 34, der Motorhaube 6, die Räder 35 samt deren Aufhängung, den Fahrgastraum 36 usw., sei nur der Vollständigkeit halber verwiesen.

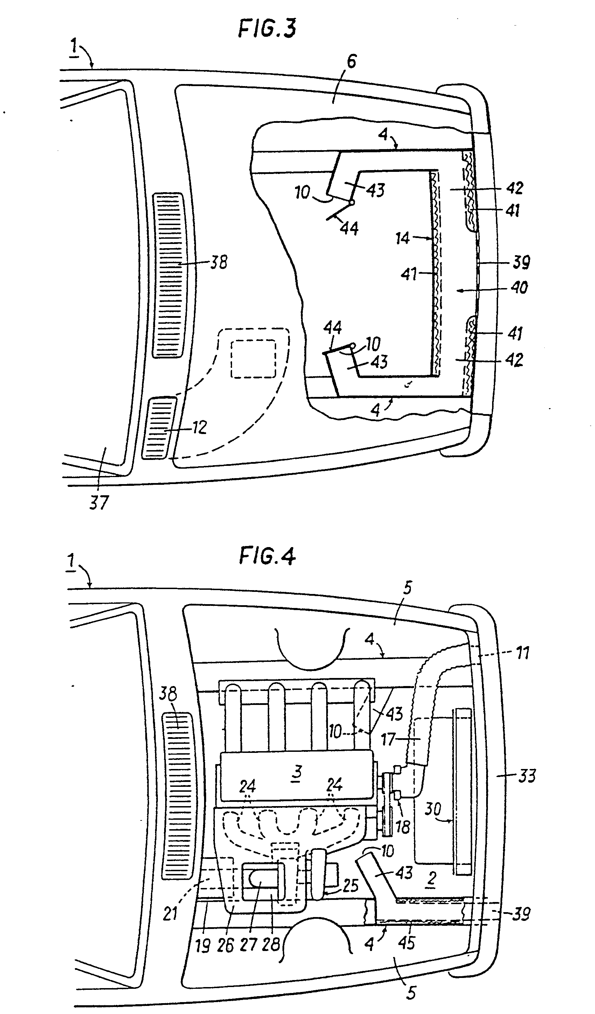

Bei stehendem Fahrzeug 1 erfolgt also die Belüftung des Motorraumes 2 bzw. des Innenraumes der schalldämmenden Kapsel 9 über das Gebläse 18, welches durch eine Zuleitungsöffnung 11 wie in Fig. 4 dargestellt, Luft ansaugt und über die Ableitungsöffnungen 12, 13 ins Freie fördert. Bis zu einem gewissen Grad hilft dabei auch die vom erhitzen Auspuffsystem 22 aufsteigende und durch die Ableitungsöffnung 12 ins Freie strömende Luft mit, die Belüftung zu verbessern. Die Ableitungsöffnung 12 ist im Bereich zwischen der Motorhaube 6 und der Windschutzscheibe 37 neben dem Einlaß 38 für die Belüftung des Fahrgastraumes 36 angeordnet.

Der vordere Querträger 14 ist mit einer in Fahrtrichtung offenen breiten Einlaßöffnung 39 versehen und zu einem ansonsten im wesentlichen geschlossenen Einlaßgehäuse 40 ausgebildet. In diesem Einlaßgehäuse 40 ist eine schallabsorbierende Auskleidung 41 angebracht. Weiters ist das Einlaßgehäuse 40 über Öffnungen 42 mit den Rahmenlängsholmen 4 des Fahrzeuges 1 in Verbindung, womit die Längsholme 4 bei in Fahrt befindlichem Fahrzeug - also Wirkung des Staudruckes an der Einlaßöffnung 39 - Kühlluft zu den Zuleitungsöffnungen 10 führen. Diese Zuleitungsöffnungen 10 sind dabei an aus den Längsholmen 4 ausmündenden Stutzen 43 angebracht und mit federbelasteten Klappen 44 versehen. Die Klappen 44 dienen dabei als Rückschlageinrichtungen, die den Austritt von Kapselkühlluft über die Zuleitungsöffnungen 10 verhindern, was ansonsten bei niedrigen Fahrzeuggeschwindigkeiten mit einem den Kapselinnendruck unterschreitenden Staudruck möglich wäre. Der Staudruck fördert durch die Zuleitungsöffnungen 10 - die im Bereich von speziell zu kühlenden Teilen der Brennkraftmaschine, wie etwa der Ölwanne, der Kraftstoffpumpe oder der Lichtmaschine, angeordnet sein können - Luft zusätzlich in die Kapsel. Weiters wird durch die Anordnung der Ableitungsöffnung 12 in einem bei in Fahrt befindlichem Fahrzeug Unterdruck aufweisenden Bereich der Außenwand ein Absaugungseffekt erzielt, der die Kapselbelüftung ebenfalls verbessert.

Es ist also mit einfachen Mitteln eine ausreichende Belüftung des Innenraumes der schalldämmenden Kapsel sowohl bei stehendem als auch bei in Fahrt befindlichem Fahrzeug sichergestellt.

Abweichend von der dargestellten, besprochenen Anordnung wäre es auch möglich, auf das Gebläse 18 zur Kapselbelüftung überhaupt zu verzichten, soferne dafür gesorgt wird, daß auch bei stehendem Kraftfahrzeug und in Betrieb befindlicher Brennkraftmaschine eine ausreichende Belüftung, beispielsweise durch die in der Abdeckung 26 aufsteigende erhitzte Luft, erfolgt. Bauteile, wie der Kompressor 25' des Turboladers oder auch Regeleinrichtungen eines hier nicht dargestellten Abgasrückführsystems, die vor zu großer Hitzeeinwirkung geschützt werden sollen, werden außerhalb der dachartigen Abdeckung 26 liegend angeordnet, was aber wegen der nach unten offenen Abdeckung keinerlei Schwierigkeiten bedeutet.

Beim Ausführungsbeispiel nach Fig. 4 entspricht die Abdeckung 26 des Auspuffsystems sowie die Anordnung der hier nicht dargestellten zugehörigen Ableitungsöffnung und die vom Staudruck geförderte Zuführung von Kapselkühlluft über die Längsholme 4 bzw. aus den Längsholmen ausmündende Stutzen 43 zu den Zuleitungsöffnungen 10 der in den Fig. 1 bis 3 dargestellten Ausführung, wobei allerdings beim Ausführungsbeispiel nach Fig. 4 keine eigenen Rückschlagklappen an den Zuleitungsöffnungen 10 vorgesehen sind. Abweichend von der Darstellung in Fig. 3 ist hier auch, daß die Längsholme 4 mit einer schallabsorbierenden Auskleidung 45 versehen sind, was entweder zusätzlich zu der Anordnung des schallisolierten Einlaßgehäuses 40 (Fig. 3) oder an Stelle davon erfolgen kann.

Im übrigen gelten auch für das Ausführungsbeispiel nach Fig. 4 die obenstehenden Ausführungen; gleiche Teile sind hier mit gleichen Bezugszeichen versehen.

Abgesehen von den dargestellten und beschriebenen Ausführungsformen könnten die Einlaßöffnungen der Zuführung der Kapselkühlluft natürlich auch an beliebigen anderen Stellen des Fahrzeuges angeordnet sein, solange nur sichergestellt ist, daß sie bei in Fahrt befindlichem Fahrzeug dem Staudruck des Fahrtwindes ausgesetzt sind. Auch kann die Anzahl und Anordnung der mit den Einlaßöffnungen in Verbindung stehenden Zuleitungsöffnungen den jeweiligen Kühlerfordernissen ohne weiteres angepaßt werden und auch durchaus von der in den behandelten Ausführungsbeispielen dargestellten abweichen.

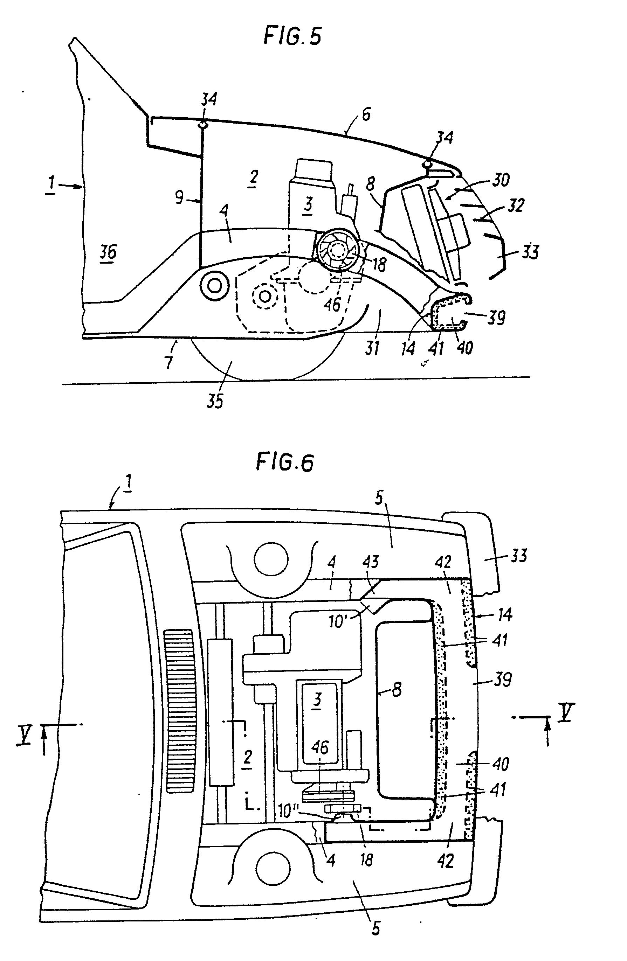

Das in den Fig. 5 und 6 dargestellte Kraftfahrzeug 1 ist wiederum als Personenwagen ausgebildet und weist eine zum Antrieb desselben dienende, frontseitig quer in einem Motorraum 2 angeordnete Brennkraftmaschine 3 auf. Der Motorraum 2 ist durch zusätzliche, gegenüber Rahmen- bzw. Karosserieteilen - wie den Rahmenlängsholmen 4, den Radkastenabdeckungen 5 oder der Motorhaube 6 - abgedichtete Schalenteile - wie beispielsweise den Boden 7 und die vordere Stauwand 8 - zu einer geschlossenen schalldämmenden Kapsel 9 vervollständigt. Die Kapsel 9 weist Zuleitungs-Öffnungen 10, 10' sowie hier nicht extra dargestellte Ableitungsöffnungen auf, welche gegen Austritt von Luftschall isoliert sind und zur Belüftung der Kapsel dienen.

Der vordere Querträger 14, ist mit einer in Fahrtrichtung offenen breiten Einlaßöffnung 39 versehen, und zu einem ansonsten im wesentlichen geschlossenen Einlaßgehäuse 40 ausgebildet. In diesem Einlaßgehäuse 40 ist eine schallabsorbierende Auskleidung 41 angebracht. Weiters ist das Einlaßgehäuse 40 über Öffnungen 42 mit den Rahmenlängsholmen 4 des Fahrzeuges 1 in Verbindung, womit die Längsholme 4 bei in Fahrt befindlichem Fahrzeug - also Wirkung des Staudruckes an der Einlaßöffnung 39 - Kühlluft zu den Zuleitungsöffnungen 10, 10' führen.

Die Zuleitungsöffnung 10 an der - in Fahrtrichtung gesehen - linken Seite des Kraftfahrzeuges 1 ist dabei an einem aus dem Längsholm 4 ausmündenden Stutzen 43 angebracht und könnte beispielsweise auch in hier nicht dargestellter Weise mit einer Rückschlageinrichtung, beispielsweise nach Art einer federbelasteten Klappe, versehen sein.

Die auf der - wiederum in Fahrtrichtung gesehen - rechten Seite des Fahrzeuges 1 vorgesehenen Zuleitungsöffnung 10' ist unmittelbar einem Kapselkühlgebläse 18 zugeordnet, welches über einen Keilriementrieb 46 von der der Zuleitungsöffnung 10' zugewandten Stirnseite der Brennkraftmaschine 3 aus angetrieben wird und bei stillstehendem Kraftfahrzeug und laufender Brennkraftmaschine bzw. bei sich mit geringer Geschwindigkeit bewegendem Kraftfahrzeug Kühlluft durch Einlaßgehäuse 40 und Längsholm 4 in die Kapsel fördert.

Abweichend von der dargestellten Ausbildung wäre es auch möglich, die Längsholme 4 bis in den Bereich der Zuleitungsöffnungen 10, 10' zusätzlich mit schallabsorbierendem Material auszukleiden; ebenso wäre es auch denkbar, daß bei entsprechender Anordnung der Brennkraftmaschine 3 bzw. der Rahmenholme 4 ein direkter Antrieb des Kapselkühlgebläses 18 von einer der drehenden Wellen der Brennkraftmaschine aus vorgesehen werden könnte.

Auf weitere Bauteile des dargestellten Fahrzeuges, wie die frontseitig angeordnete Kühler-Lüfter-Gruppe 30, den Luftableitungsschacht 31, den Kühlergrill 32, die Stoßstange 33, die Dichtungen 34 der Motorhaube 6, die Räder 35 samt deren Aufhängung den Fahrgastraum 36 usw. sei nur der Vollständigkeit halber verwiesen.

Diese Ausbildung eines Kraftfahrzeuges ergibt den Vorteil, daß auf einfache Weise und zum größten Teil mit bereits vorhandenen Rahmenbauteilen einerseits, eine für größere Fahrzeuggeschwindigkeiten ausreichende Staudruckbelüftung der Kapsel sichergestellt ist und andererseits die Anordnung eines für die ausreichende Kapselbelüftung bei stehendem oder mit geringer Geschwindigkeit bewegtem Fahrzeug erforderlichen Kapselkühlgebläses bzw. die Zuführung von Kühlluft zu diesem Kapselkühlgebläse durch Mitverwendung eines Teiles dieser bereits zur Luftführung ausgebauten Rahmenbauteile vereinfacht wird.

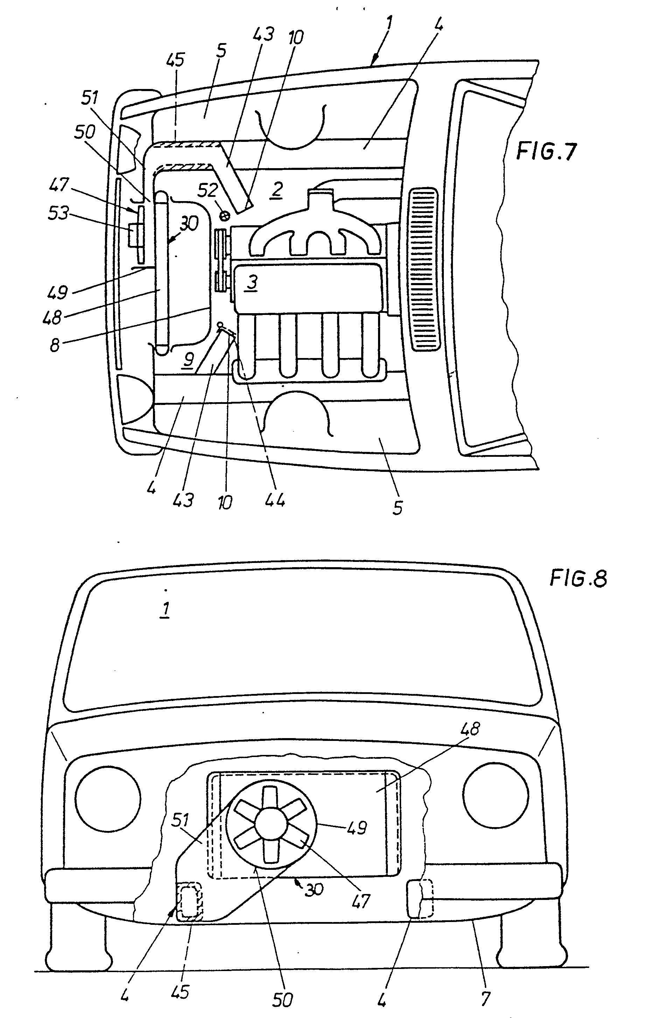

Das Kraftfahrzeug in den Fig. 7 und 8 ist wiederum als Personenwagen ausgebildet und weist eine zum Antrieb desselben dienende, frontseitig in einem Motorraum 2 angeordnete Brennkraftmaschine 3 auf. Der Motorraum 2 ist durch zusätzliche, gegenüber Rahmen- bzw. Karosserieteilen - wie den Rahmenlängsholmen 4 oder den Radkastenabdeckungen 5 - abgedichtete Schalenteile - wie beispielsweise den Boden 7 und die vordere Stauwand 8 - zu einer geschlossenen, schalldämmenden Kapsel 9 vervollständigt. Die Kapsel 9 weist Zuleitungsöffnungen 10', 10'' sowie hier nicht extra dargestellte Ableitungsöffnungen auf, welche gegen Austritt von Luftschall isoliert sind und zur Belüftung der Kapsel dienen.

Der hier nicht weiter dargestellte vordere Querträger des Fahrzeuges ist mit einer in Fahrtrichtung offenen breiten Einlaßöffnung versehen, welche über ebenfalls nicht dargestellte Öffnungen bei in Fahrt befindlichem Fahrzeug - also Wirkung des Staudruckes an der Einlaßöffnung - Kühlluft in die Längsholme 4 bzw. im dargestellten Ausführungsbeispiel zumindest in den - in Fahrtrichtung gesehenlinken Längsholm 4 fördert. Die Zuleitungsöffnung 10' ist dabei an einem aus dem Längsholm 4 ausmündenden Stutzen 43 angebracht, was die gezielte Zufuhr von Kühlluft zu besonders zu kühlenden Stellen der Brennkraftmaschine oder ihrer Zusatzaggregate ermöglicht.

Die Zuleitungsöffnung 10'' an der - in Fahrtrichtung gesehen - rechten Seite des Kraftfahrzeuges 1 ist ebenfalls an einem aus dem zugehörigen Längsholm 4 ausmündenden Stutzen 43 angeordnet, wobei hier jedoch der Zuführteil des Längsholmes 4 nicht mit dem Querträger in Verbindung steht und daher auch nicht vom Staudruck beaufschlagt wird.

Zur Zwangsbelüftung des Innenraumes der Kapsel 9 in Betriebszuständen des Fahrzeuges, bei denen der Kühlbedarf für den Innenraum der Kapsel durch den vor dem Fahrzeug anstehenden Staudruck nicht bewältigt werden kann, ist im dargestellten Ausführungsbeispiel eine Verbindung zwischen dem Luftführungsgehäuse 49 zwischen dem - wiederum in Fahrtrichtung gesehen - vor dem Kühler 48 angeordneten Lüfter 47 und dem Kühler 48 selbst und dem Längsholm 4 vorgesehen, die als von einer Abzweigöffnung 50 am Umfang des Luftführungsgehäuses 49 ausgehende Zuleitung 51 ausgebildet ist.

Der Lüfter 47 wird von einem Elektromotor 53 angetrieben, der in üblicher Weise thermostatisch vom jeweiligen Betriebszustand der Brennkraftmaschine (beispielsweise über Kühlwassertemperatur) abhängig ein- bzw. ausschaltbar ist. Im Bereich von besonders zu kühlenden Stellen der Brennkraftmaschine 3 oder ihrer Zusatzaggregate - wie beispielsweise der Lichtmaschine oder der Einspritzpumpe - kann ein Temperaturfühler 52 angeordnet sein, der in hier nicht dargestellter Weise mit der Einschaltautomatik des Elektromotors 53 so verknüpft ist, daß damit zusätzlich zum Temperaturfühler im Kühlwasser der Lüfter 47 bei Überschreitung einer vorgegebenen Temperatur am Ort des Temperaturfühlers 52 ein- bzw. ausschaltbar ist.

Es ist mit dieser Anordnung auf sehr einfache Weise und ohne Anordnung eines zusätzlichen Lüfters für die Kapselbelüftung erreicht, daß bei nichtausreichendem Staudruck die Kapselbelüftung zwangsweise über einen temperaturabhängig einschaltbaren Lüfter erfolgen kann, wobei weitgehend bereits vorhandene Bauteile (Lüfter, Luftführungsgehäuse, Rahmenholme) mitbenützt werden können.

Hinzuweisen wäre auch noch darauf, daß im dargestellten Ausführungsbeispiel das Innere des Rahmenholmes 4 zwischen der Zuleitung 51 und dem Stutzen 43 zur Zuleitungsöffnung 10'' mit einer schallabsorbierenden Auskleidung 45 versehen ist, was den aus der schalldämmenden Kapsel 9 nach außen dringenden Geräuschpegel weiter herabsetzen kann.

Weiters ist noch darauf hinzuweisen, daß die von der Abzweigöffnung 50 bzw. der Zuleitung 51 unabhängigen Zuströmwege für die Staudruckbelüftung der Kapsel 9 mit Rückschlageinrichtungen, wie beispielsweise federbelasteten Klappen, Gummiklappen od. dgl. versehen sein können, womit die unerwünschte Rückförderung von Kapselkühlluft bei Zwangsbelüftung über diese Strömungswege vermieden werden kann. Eine derartige Klappe 44 ist in Fig. 7 strichliert an der Zuleitungsöffnung 10' eingezeichnet; davon abgesehen, könnten derartige Einrichtungen aber auch im Inneren der Zuströmwege für die Staudruckbelüftung oder an der Einlaßöffnung des vorderen Querträgers vorgesehen sein.

## Patentansprüche

1. Kraftfahrzeug mit einer zum Antrieb desselben dienenden, in einem frontseitigen Motorraum angeordneten, wassergekühlten Brennkraftmaschine (3), wobei der Motorraum durch zusätzliche, gegenüber Rahmen- bzw. Karosserieteilen abgedichtete Schalenteile zu einer schalldämmenden Kapsel (9) vervollständigt ist, welche schalldämpfende Zu- und Ableitungen (10,10', 10''; 12, 13) für die Kapselkühlluft aufweist, und wobei unabhängig von einer Gebläsebelüftung der Kapsel (9) zumindest eine Zuleitungsöffnung (10, 10') für die Kapselkühlluft mit einer Einlaßöffnung (39) in Verbindung steht, welche an einer bei in Fahrt befindlichem Fahrzeug dem Staudruck ausgesetzten Stelle des Fahrzeuges angeordnet ist, dadurch gekennzeichnet, daß zumindest einer der in die Kapselwand integrierten Rahmenlängsholme (4) Kapselkühlluft zur Zuleitungsöffnung (10, 10', 10'') führt.

2. Kraftfahrzeug nach Anspruch 1, dadurch gekennzeichnet, daß im Bereich des vorderen Endes der Rahmenlängsholme (4) ein Querträger (14) mit einer in Fahrtrichtung offenen Einlaßöffnung (39) vorgesehen ist und zu einem ansonsten im wesentlichen geschlossenen Einlaßgehäuse (40) ausgebildet ist, eine schallabsorbierende Auskleidung (41) vorgesehen ist und zumindest mit einem der Rahmenlängsholme (4) über eine Öffnung (42) in Verbindung steht.

3. Kraftfahrzeug nach Anspruch 1 oder 2, dadurch gekennzeichnet, daß die Zuleitungsöffnung(en) (10) im Bereich von besonders zu kühlenden Teilen bzw. Zusatzaggregaten der Brennkraftmaschine (3) angeordnet ist bzw. sind.

4. Kraftfahrzeug nach einem der Ansprüche 1 bis 3, mit einem eigenen Gebläse (18) zur Kapselbelüftung, dadurch gekennzeichnet, daß die vom Gebläse (18) unabhängige(n) Zuleitung(en) (10, 43) mit einer Rückschlageinrichtung (44) versehen ist bzw. sind, welche bei Überschreitung des jeweiligen Staudruckes durch den Kapselinnendruck den Austritt von Kapselkühlluft an dieser Stelle verhindert.

5. Kraftfahrzeug nach Anspruch 4, dadurch gekennzeichnet, daß die Rückschlageinrichtung in an sich bekannter Weise als federbelastete Klappe (44) ausgebildet ist.

6. Kraftfahrzeug nach Anspruch 2, dadurch gekennzeichnet, daß bei einer quer zur Fahrzeuglängsachse eingebauten Brennkraftmaschine (3) ein eigenes Kapselkühlgebläse (18) im Bereich einer Zuleitungsöffnung (10') eines Rahmenholmes (4) angeordnet ist, welches von der Brennkraftmaschine (3) bzw. einem Zusatzaggregat aus angetrieben ist.

7. Kraftfahrzeug nach Anspruch 2, dadurch gekennzeichnet, daß der Lüfter (47) der Kühler-Lüfter-Einheit (30) der Brennkraftmaschine (3) - in Fahrtrichtung gesehen vor dem Kühler (48) angeordnet und thermostatisch gesteuert unabhängig vom jeweiligen Betriebszustand der Brennkraftmaschine (3) antriebbar ist, daß zwischen Lüfter (47) und Kühler (48) ein zumindest teilweise geschlossenes Luftführungsgehäuse (49) angeordnet ist, und daß das Luftführungsgehäuse (49) eine Abzweigöffnung (50) aufweist, welche über eine Zuleitung (51) mit zumindest einem der mit einer Zuleitungsöffnung (10) versehenen Rahmenlängsholme (4) in Verbindung steht.

8. Kraftfahrzeug nach Anspruch 7, dadurch gekennzeichnet, daß die von der Abzweigöffnung (50) bzw. der Zuleitung (51) unabhängigen Zuströmwege für die Staudruckbelüftung der Kapsel (9) mit Rückschlageinrichtungen, wie beispielsweise federbelasteten Klappen (44) versehen sind.

9. Kraftfahrzeug nach Anspruch 7 oder 8, dadurch gekennzeichnet, daß im Bereich von besonders zu kühlenden Stellen der Brennkraftmaschine (3) oder ihrer Zusatzaggregate zumindest ein Temperaturfühler (52) angeordnet ist, über den zusätzlich zum Temperaturfühler im Kühlwasser der Lüfter (47) bei Überschreitung einer vorgegebenen Temperatur ein- bzw. ausschaltbar ist.


## Claims

1. An automotive vehicle which is powered by a water-cooled internal combustion engine (3) mounted in an engine compartment at the front end of the vehicle, the said compartment being complemented by additional encapsulating elements sealed against parts of the frame and body of the vehicle to form a sound-insulating capsule (9) comprising sound-absorbing inlets and outlets (10, 10', 10''; 12, 13) for the cooling air of the capsule, of which inlets - irrespective of any blower ventilation of the said capsule (9)- at least one (10, 10') will communicate with an intake opening (39) positioned in an area of the vehicle exposed to the dynamic pressure developing when the vehicle is in motion, wherein

at least one of the longitudinal spars (4) of the frame integrated into the wall of the capsule will convey cooling air for the capsule to the said inlet (10, 10', 10'').

2. An automotive vehicle according to claim 1, wherein the front ends of said longitudinal spars (4) are provided with a cross-member (14) with an intake opening (39) open in the direction of motion, which cross-member (14) is basically configured as a closed intake housing (40), and is provided with a sound-absorbing lining (41), and is furthermore connected to one or more of the said longitudinal spars (4) via an opening (42).

3. An automotive vehicle according to claim 1 or 2, wherein said inlet(s) (10) is (are) located in the vicinity of parts or auxiliary assemblies of the internal combustion engine (3) requiring special cooling.

4. An automotive vehicle according to any of claims 1-3, with a separate blower (18) for ventilation of the capsule, wherein the inlet(s) (10, 43) independent of the blower is (are) provided with a check-valve (44) which will prevent the escape of cooling air from the capsule in this area when the respective dynamic pressure is being surpassed by the pressure within the capsule.

5. An automotive vehicle according to claim 4, wherein the said check-valve is configured as a conventional spring-loaded flap (44).

6. An automotive vehicle according to claim 2 whose engine (3) is mounted transversely to the longitudinal axis of the vehicle, wherein a separate blower (18) for ventilation of the capsule is provided in the area of an inlet (10') of a frame spar (4), which blower is driven by the internal combustion engine (3) or an auxiliary assembly.

7. An automotive vehicle according to claim 2, wherein the fan (47) of the radiator/fan assembly (30) of the said internal combustion engine (3) is placed in front of the radiator (48) (facing forward), and is thermostatically controlled and driven independently of the prevailing operational state of the engine (3), and wherein an air intake duct (49) is positioned between said fan (47) and said radiator (48) which is closed at least partly, and wherein said air intake duct (49) has a side opening (50) which is connected via a feed conduit (51) with one or more of said longitudinal frame spars (4) and their inlets (10).

8. An automotive vehicle according to claim 7, wherein the flow paths for ventilation of the said capsule (9) by means of dynamic pressure, which are independent of said side opening (50) and said feed conduit (51), are provided with check-valves, e.g. spring-loaded flaps (44).

9. An automotive vehicle according to claim 7 or 8, wherein one or more temperature sensors (52) are positioned in those areas of the said internal combustion engine (3) or its auxiliary assemblies requiring special cooling, via which - in addition to the temperature sensor in the cooling water - the said fan (47) is turned on or off when a given temperature is being exceeded.


## Revendications

1.- Véhicule automobile avec un moteur à combustion interne refroidi à l'eau (3), disposé dans un compartiment moteur frontal et servant à l'entraînement du véhicule, le compartiment moteur étant complété par des parties supplémentaires d'enveloppe étanchées par rapport au châssis, ainsi qu'aux parties de la carrosserie pour constituer une capsule insonorisante (9), et comportant des canalisations d'admission et d'évacuation insonorisées (10, 10', 10''; 12, 13) pour l'air de refroidissement de la capsule, et, indépendamment d'une aération par soufflante de la capsule (9), au moins un orifice (10, 10', 10'') pour l'alimentation en air de refroidissement de la capsule étant en communication avec un orifice d'admission (39), disposé à un emplacement du véhicule (1) exposé à la pression dynamique lorsque ce véhicule (1) est en déplacement, véhicule caractérisé en ce qu'au moins un des longerons (4) du chassis, intégrés dans la paroi de la capsule, canalise l'air de refroidissement de la capsule vers l'orifice d'alimentation (10, 10', 10'').

2.- Véhicule automobile selon la revendication 1, véhicule caractérisé en ce que, au voisinage de l'extrémité avant des longerons (4) du châssis, une traverse avant (14) est munie d'un orifice d'admission (39) ouvert dans la direction de déplacement du véhicule, et revêt la forme d'un boîtier d'admission (40), par ailleurs essentiellement fermé, tandis qu'il est prévu, dans ce boîtier d'admission, un revêtement (41) absorbant le son, ce boîtier d'admission étant en communication, par l'intermédiaire d'un orifice (42), avec au moins un des longerons (4) du châssis.

3.- Véhicule automobile selon la revendication 1 ou 2, caractérisé en ce que l'orifice, ou les orifices, d'alimentation (10) est disposé, ou sont, disposés au voisinage des parties ou des équipements complémentaires du moteur à combustion interne à refroidir particulièrement.

4.- Véhicule automobile selon une des revendications 1 à 3, avec une soufflante (18) affectée en propre à l'aération de la capsule, véhicule caractérisé en ce que l'admission, ou les admissions (10, 43), indépendante, ou indépendantes, de la soufflante (18), est munie, ou bien sont munies d'un dispositif de retenue (44) qui, en cas de dépassement de la pression dynamique du moment par la pression interne de la capsule, empêche à cet emplacement la sortie de l'air de refroidissement de la capsule.

5.- Véhicule automobile selon la revendication 4, caractérisé en ce que le dispositif de retenue est constitué, d'une façon en soi connue, par un clapet (44) sollicité par un ressort.

6.- Véhicule automobile selon la revendication 2, caractérisé en ce que, dans le cas d'un moteur à combustion interne (3) monté transversalement par rapport à l'axe longitudinal du véhicule, une soufflante (18) propre au refroidissement de la capsule est disposée au voisinage d'un orifice d'alimentation (10') d'un longeron (4) du châssis, cette soufflante étant entraînée par le moteur à combustion interne (3) ou bien par un équipement complémentaire.

7.- Véhicule automobile selon la revendication 2, caractérisé en ce que le ventilateur (47) de l'ensemble de refroidissement et de ventilation (30) du moteur à combustion interne (3) qui est disposé, vu dans le sens du déplacement, devant le radiateur (8) et commandé thermostatiquement, est susceptible d'être entraîné indépendamment de l'état de fonctionnement momentané du moteur à combustion interne (3), un carter de guidage de l'air (49), au moins partiellement fermé, étant ménagé entre le ventilateur (47) et le radiateur (48), et ce carter de guidage de l'air comportant un orifice de dérivation (50) qui, par l'intermédiaire d'une canalisation d'alimentation (51) est en communication avec au moins un des longerons (4) muni d'un orifice d'alimentation (10) du châssis.

8.- Véhicule automobile selon la revendication 7, caractérisé en ce que les trajets d'alimentation, indépendants de l'orifice de dérivation (50) ou bien de la canalisation d'alimentation (51) pour l'aération de la capsule (9) par la pression dynamique, sont munis de dispositifs de retenue tels que par exemple des clapets sollicités par des ressorts.

9.- Véhicule automobile selon l'une des revendications 7 ou 8, caractérisé en ce que, au voisinage d'emplacements à refroidir particulièrement du moteur à combustion interne (3) ou de ses équipements, il est prévu au moins un détecteur de température (52) par l'intermédiaire duquel, en complément du détecteur de température dans l'eau de refroidissement, le ventilateur (47) est susceptible d'être enclenché ou déclenché en cas de dépassement d'une température prédéfinie.

## FIG.1

## FIG.2

## FIG.3

## FIG.4

**FIG. 5**

**FIG. 6**

FIG.7

FIG.8